# EUROPEAN PATENT APPLICATION

(11) **EP 2 141 647 A1**
(43) Date of publication of application: **06.01.2010**
(21) Application number: 09164048.2
(22) Date of filing: 29.06.2009
(51) Int. Cl.: G06Q 20/00

(54) **Systems and methods for secure pin-based transactions via a host based pin pad**

(30) Priority: 30.06.2008 US 164837
(71) Applicant: Accullink LLC, Atlanta, GA 30339 (US)
(72) Inventor: Sheth, Nandan, Atlanta, GA 30339 (US); Bahl, Ashish, Atlanta, GA 30339 (US)
(74) Representative: Beck, Simon Antony

(57) **Abstract**

A method and system for securely verifying over an open network a transaction using a payment card requiring authorization, such as a PIN, to be used. The system utilizes a secure host system to establish two lines of communication between a merchant and a consumer device used by an individual using the payment card. The secure host system provides a verification interface that is presented to the consumer device, providing a means for the individual to provide verification information. The secure host system receives verification information from the consumer device, couples the verification information with card information supplied by a merchant for verification from a third party payment provider. The transaction service provider verifies the transaction without sending the cardholder's actual PIN over the open network.

## Description

### FIELD OF INVENTION

This invention relates to the field of secure PIN-based transactions for financial and non-financial applications requiring authentication over an open network environment such as the Internet.

### BACKGROUND

Increasing bandwidth and lower access costs has enabled the rapid growth in electronic commerce between online merchants and consumers. The ability to conduct secure financial transactions between devices connected to an open network like the Internet is a concern for consumers, merchants and financial institutions alike. Open networks provide significant opportunity for fraudsters to intercept personal and confidential information that can be used to conduct unauthorized financial transactions. On-line debit card transactions and other transactions that require a consumer to provide an account number and an associated personal identification number (PIN) are particularly risky because an interceptor could use that information to directly access the consumer's financial account.

Attempts have been made to secure the transfer of information over an open network like the Internet for the purpose of conducting financial transactions. Some attempts have involved systems for encrypting account or payment card information and PINs before they are sent from a consumer's device, such as a PC, mobile phone or set-top box, to a merchant's server over the Internet. These systems are inconvenient because they require the installation of add-on hardware devices and software. Some hardware devices include physical PIN-pad or card swipe devices which are connected to the open network through the consumer's device. Additionally, such systems may require software to be installed on a consumer's device. These add-ons, whether physical devices or software applications installed on a consumer's device, perform data entry activities as well as encrypt entered data before transmitting the data across an open network. While transmitting encrypted information over a network is better than transmitting non-encrypted information, such information remains susceptible to interception and subsequent decryption. In some prior art systems, both a primary account number (PAN) and a PIN are encrypted and sent together over a network, giving would-be fraudsters the opportunity to intercept at one time all the information that is necessary to access the consumer's financial account.

What is needed, therefore, are systems and methods for transferring and verifying information over a network in a secure manner without requiring consumers to install special encryption hardware and/or software on their devices. Additionally, there is a need to collect the PIN and PAN data from two dedicated and secure channels utilizing data masking techniques to code the actual values of the data that are being transmitted.

### SUMMARY

The present invention provides a system and method for securely authorizing a PIN-based transaction between a merchant system and a consumer device over an open network. The system may receive, from the merchant system through a first line of communication, transaction data that includes a PAN and a payment amount. The transaction data may also include a merchant ID. The system may present a verification interface to the consumer device through a second line of communication. The verification interface will be host-based and may include several interactive controls, the interactive controls representing PIN elements. This verification interface will not require the consumer to add-on, connect or configure a hardware device to the consumer device connected to the Internet, nor download additional software. The controls may be randomly arranged on the verification interface. The system may receive from the consumer device, over the open network, coordinates that represent the locations of the interactive controls within the verification interface. The system may then determine the PIN elements based on the received coordinates. The system may build a PIN block based on the PIN elements it has determined and the transaction data already received and stored. The system may then send the PIN block to a third party payment processor system for authorization of the transaction. The system may alert the merchant system as to the confirmation or denial of the authorization of the transaction, based upon the response of the third party payment processor system.

### DETAILED DESCRIPTION OF THE FIGURES

These and other features, aspects, and advantages of the invention are better understood when the following Detailed Description is read with reference to the accompanying drawings.

Figure 1 is a functional block diagram of a system for secure pin-based transactions according to certain exemplary embodiments of the invention.

Figure 2 is a block diagram of a verification interface according to certain exemplary embodiments of the invention.

Figure 3 is a flow chart illustrating a method of completing a transaction over an open network according to certain exemplary embodiments of the invention.

Figure 4 is a flow chart illustrating a method of verifying a transaction over an open network according to certain exemplary embodiments of the invention.

### DETAILED DESCRIPTION

Embodiments of the invention provide systems and methods for secure PIN-based transactions in a network environment. References herein to a "PIN" are intended generally to encompass any type of password, passcode or other verification information. The term "PIN-based transaction" is used herein to refer to any transaction that requires an individual to provide account information, such as an account number or other identifier, as well as a PIN. PIN-based transactions include, but are not limited to, debit card and credit card transactions. As one example of a PIN-based transaction, a consumer may use a debit card to make a payment to an online merchant via the merchant's website. As used herein, the term "consumer" is meant to refer to any entity that initiates a pin-based transaction and the term "merchant" is meant to refer to any entity with whom the transaction is to be completed.

The present invention allows on-line PIN-based transactions to be completed without transferring an actual PIN over a network or requiring any add-on hardware such as a hardware pin pad or a hardware card swipe device. Instead, data associated with or indicative of a PIN is transmitted from a consumer's device to a secure host system for processing. The PIN data is input by the consumer via a graphical user interface, referred to herein as a "verification interface," that is presented to the consumer's device by the secure host system through a web-browser or an equivalent mechanism. Other transaction data, including the consumer's account information, is transmitted from the consumer's device to a merchant's system. Thus, the PIN data is transmitted over the network independently from other transaction data. The secure host system may be maintained and/or operated by an entity other than the merchant.

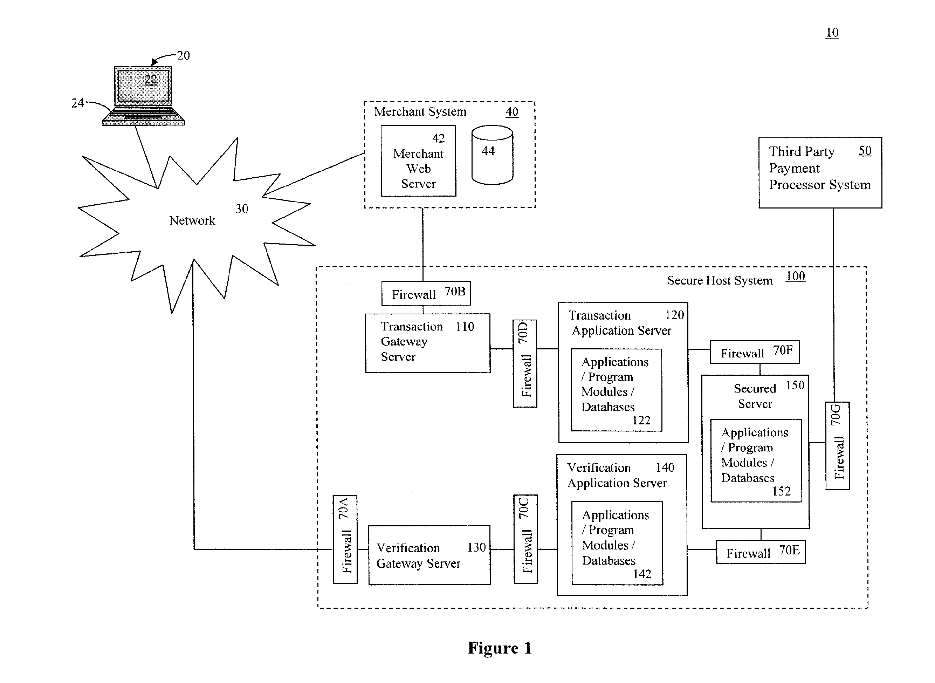

Exemplary embodiments of the present invention will hereinafter be described with reference to the drawings, in which like numerals are used to indicate like elements. Figure 1 is a functional block diagram illustrating a secure PIN-based transaction system 10 according to certain exemplary embodiments of the present invention. As shown, the exemplary secure PIN-based transaction system 10 includes a consumer device 20, a network 30, a merchant system 40, a third party payment processor system 50, and a secure host system 100.

The consumer device 20 may be any device that a consumer can use to initiate a transaction, such as a financial transaction, with a merchant system 40 via a network. The consumer device 20 may be any device that can interact with the resources of a particular network 30 and will typically be a processor-driven device that includes a display 22, a data input device 24 (e.g., a mouse or a keyboard), and a network interface (not shown). The display 22 may be touch-sensitive to accept input signals from a pointing device such as a stylus or finger. The network interface of the consumer device 20 may take any well-known or emerging form, such as modem, a network interface card, or the like. The consumer device 20 may thus be configured to communicate with the network 30 via a wireless connection and/or via a wire-line connection. The consumer device 20 may be configured to communicate according to any suitable communication protocol(s).

The consumer device 20 may also be configured to execute software for, among other things, sending, receiving and displaying data. For example, the consumer device may execute web browser software for requesting, receiving and/or displaying webpages from the merchant system 40 and the secure host system 100 and for inputting data to such webpages. In one embodiment, the web browser software is configured to support Asynchronous JavaScript + XML (Ajax). Ajax introduces an intermediary, known as an Ajax controller, between the web browser software and the server that provides data to the web browser software. In other embodiments, the web browser software may be configured to support other scripts, languages and/or applications incorporated into webpages.

As shown in Figure 1, the consumer device 20 may be a laptop computer.
However, the consumer device 20 may also or alternatively be a personal computer, a handheld computer, a personal digital assistant, a cell phone, a smart phone, a Blackberry, a set-top box, a kiosk, or any other devices or systems having at least the above-described capabilities. These and other types of consumer devices 20 will be apparent to one of ordinary skill in the art.

The network 30 may comprise any telecommunication and/or data network, whether public or private, such as a local area network, a wide area network, an intranet, an internet and any combination thereof and may be wire-line and/or wireless. For example, the network 30 may be the Internet, a cellular network, a satellite network and/or a cable network. The network 30 provides a connection between the consumer device 20 and the merchant system 40, as well as a connection between the consumer device 20 and the secure host system 100. Although exemplary embodiments will be described herein in the context of a web-based environment, it will be appreciated that the various principles and methods of operation of the invention will be applicable or may be practiced in other network environments as well.

Both the merchant system 40 and the secure host system 100 may include various network devices for accessing and reading associated computer-readable media having stored thereon data and/or computer-executable instructions for implementing the various methods of the present invention. Generally, a network device includes a network interface for transmitting and receiving data and/or computer-executable instructions over the network 30, and a memory for storing data and/or computer-executable instructions. A network device may also include a processor for processing data and executing computer-executable instructions, as well as other internal and peripheral components that are well known in the art (e.g., input and output devices.) As used herein, the term "computer-readable medium" describes any form of computer memory or a propagated signal transmission medium. Propagated signals representing data and computer-executable instructions are transferred between network devices.

The merchant system 40 may include a merchant web server 42, a merchant database 44 and/or other network devices. The merchant web server 42 may, among other things, host merchant web page files comprising a merchant website. Through a graphical user interface provided by the merchant website, the merchant may offer for sale products and/or services via the network 30 and may allow a consumer (i.e., the operator of the consumer device 20) to input transaction data for initiating transactions relating to the same.

The secure host system 100 is configured to verify transactions between the merchant system 40 and the consumer device 20 in a secure manner. The secure host system 100 may include several network devices, such as a transaction gateway server 110, a transaction application server 120, a verification gateway server 130, a verification application server 140, and a secured server 150.

The transaction gateway server 110 may, among other things, provide an interface between the secure host system 100 and the merchant system 40 via a secure link. For example, the merchant system 40 may communicate with the transaction gateway server 110 via a dedicated communication link, such as a secure point-to-point connection, or through secure network communications. Secure communications via the network 30 may be conducted using a secure transmission protocol or handshake, such as the secure shell BSD, Point to Point Tunneling Protocol (PPTP), also commonly know as Virtual Private Network, and/or secure socket layering (SSL) protocol. Other methods for achieving a secure connection between the merchant system 40 and the secure host system 100 will be apparent to those of ordinary skill in the art.

Accordingly, the merchant system 40 may send transaction requests and transaction data to the transaction gateway server 110 in a secure manner. The transaction gateway server 110 routes such requests and data to the appropriate transaction application server 120 for processing. The transaction application sever 120 includes one or more applications, databases and/or program modules 122 for verifying transaction requests, for processing and managing transaction data, and for communication transaction authorizations and denials to the merchant system 40.

The verification gateway server 130 may, among other things, host web page files comprising a verification interface. Through the verification interface, the verification gateway server 130 may allow the consumer (i.e., the operator of the consumer device 20) to input PIN data for completing transactions initiated via the merchant website. The verification gateway server 130 routes PIN data and other information collected from the consumer device 20 to the appropriate verification application server 140. The verification application server 140 may include one or more applications, databases and/or program modules 142 that are responsible for processing and managing PIN data received from the consumer device 20 and generating or selecting appropriate verification interfaces based on the configuration of the consumer device 20. The verification application server 140 may also be configured to determine geo-location information for the consumer device 20 (*i.e.,* based on the IP address of the consumer device 20) in order to insure a legitimate transaction is occurring.

The transaction application server 120 and the verification application server 140 are connected to a secured server 150. The secured server may be, but is not limited to, a hardware security module ("HSM"). The secured server 150 includes one or more applications, databases and/or program modules 152 for generating algorithms or seeds for algorithms used for randomly rearranging the verification interface, decrypting the PIN data (received from the consumer device 20 via the network 30) and transaction data (received from the merchant system 40 via a secure communication link), determining a PIN based on the PIN data, and communicating with one or more third-party payment processor systems 50. Another function performed by the secured server 150 is to build and encrypt PIN blocks from the collected data. PIN blocks are the assembly of a PIN and PAN into a block of data as specified by ANSI Standard X9.8-1995. As shown and described with respect to Figure 1, transaction data and PIN data arrive at the secured server 150 via separate and independent paths and are not combined prior to reaching the secured server 150. This separation provides enhanced security for PIN-based transactions.

Each access point to the secure host system 100, i.e., the transaction gateway server 110 which communicates with the merchant system 40, the verification gateway server 130 which communicates with the consumer device 20 and the secured server 150 which communicates with the third party payment processor system 50, may be secured by a firewall 70A, 70B, 70G. The fact that a PIN block is built on a secured server 150 behind a firewall utilizing data from two separate and secure channels provides a much greater level of security than other systems that build PIN blocks on the consumer's device and send the PIN block over an open network for third party processing. Optionally, additional firewalls 70C-F, may be used between each of the devices of the secure host system 100 for added security.

The same secured server 150 or another dedicated secured server may communicate with a third party payment processor system 50 through a dedicated communication link or via secure network communications. The third party payment processor system 50 is responsible for processing and verifying information included in PIN blocks, authorizing transactions and processing payments on behalf of financial institutions. Since third party payment processor systems 50 are well known in the art, they are not described in detail herein.

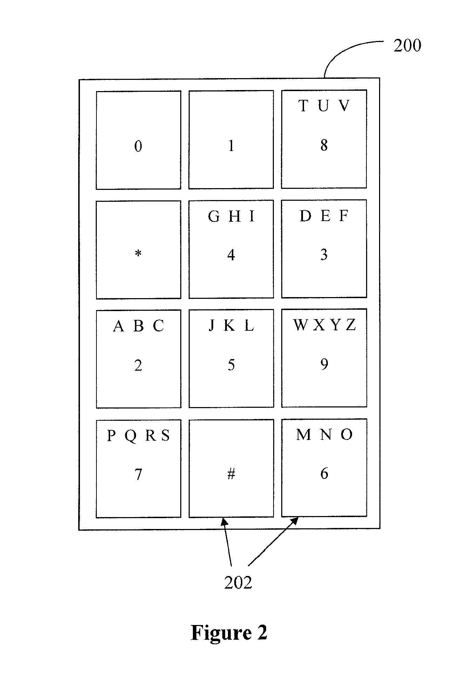

Figure 2 is a block diagram of a verification interface according to certain exemplary embodiments of the invention. As discussed above, the secure host system 100 generates a verification interface 200 that is ultimately displayed on the consumer device 20. The verification interface 200 is the mechanism through which the secure host system 100 collects PIN data and certain other information from the consumer device 20. In the embodiment shown in Figure 2, the verification interface 200 is a presented in the familiar form of a PIN pad. The exemplary verification interface 200 has interactive components 202, which may represent buttons on the PIN pad. The buttons thus include alpha-numeric elements that are used to form the consumer's PIN. For example, the consumer's PIN may be a sequence of numbers or a string of letters or a combination thereof, which can be input by selecting the interactive components 202 corresponding to each included number or letter. Those skilled in the art will appreciate that the verification interface 200 may alternatively be presented in any other form suitable for collecting PIN data from the consumer device 20 and may include other types of interactive components 202 such as radio boxes, and drop-down menus and the like. In other embodiments, a consumer's PIN may comprise numeric, alpha-numeric and/or iconic elements, which may be appropriately displayed on the verification interface 200.

The verification interface 200 is hosted by the secure host system 100 and, when invoked, may be presented to the consumer device 20 via the network 30 as an object embedded in a merchant webpage. For example, a merchant webpage may include code that causes web browser software executed by the consumer device 20 to make a call to the secure host system 100 for presentation of the verification interface 200. The verification interface 200 may be implemented as an Ajax control or any other suitable script, program, object or the like. Because the verification interface 200 is hosted by the secure host system 100 and presented to the consumer device 20 as an object embedded in webpage, the consumer device 20 requires no additional hardware or software to be installed on order to securely pass PIN data to the secure host system 100.

When inputting a PIN via the verification interface 200, the consumer selects the interactive components 202 corresponding to the elements of the PIN. As each interactive component 202 is selected, its coordinates within the verification interface 200 are recorded and are subsequently transferred via the network 30 to the secure host system 100. Coordinates for each PIN element may be transmitted to the secure host system 100 as they are recorded, or may be sent in batch after all PIN elements have been selected. Importantly, the actual PIN elements are not transferred over the network 30; instead data representing the coordinates within the verification interface 200 of the selected interactive components 202 are transferred over the network 30. The secure host system 100, specifically the secured server 150, later determines the actual PIN elements that correspond to such coordinates and thereby constructs the PIN.

The secure host system 100 may dynamically generate the verification interface 200 on a per transaction basis. In certain embodiments, the interactive components 202 of the verification interface 200 are displayed in a random arrangement. As such, that the elements that make up a PIN are not displayed in expected or predictable positions. Therefore the elements of a PIN cannot be easily discerned by simple observation of the consumer's interaction with the verification interface 200 or by interception of the coordinates generated by such interaction. As mentioned above, the verification application server 140 may be responsible for generating the verification interface 200 and the secured server 150 may be responsible for generating an algorithm, or a seed for an algorithm executed by the verification application server 140, for randomizing the interactive components 202. The randomization algorithm may be regenerated or re-seeded each time the verification interface 200 is invoked. The algorithm may also be designed to randomly rearrange the interactive components 202 of the verification interface 200 once per one transaction or after selection of each interactive component 202 until input of a PIN is complete. A key or seed used for randomizing the algorithm is stored in the secured server 150 for later use in determining the consumer's PIN based on the PIN data collected via the verification interface 200.

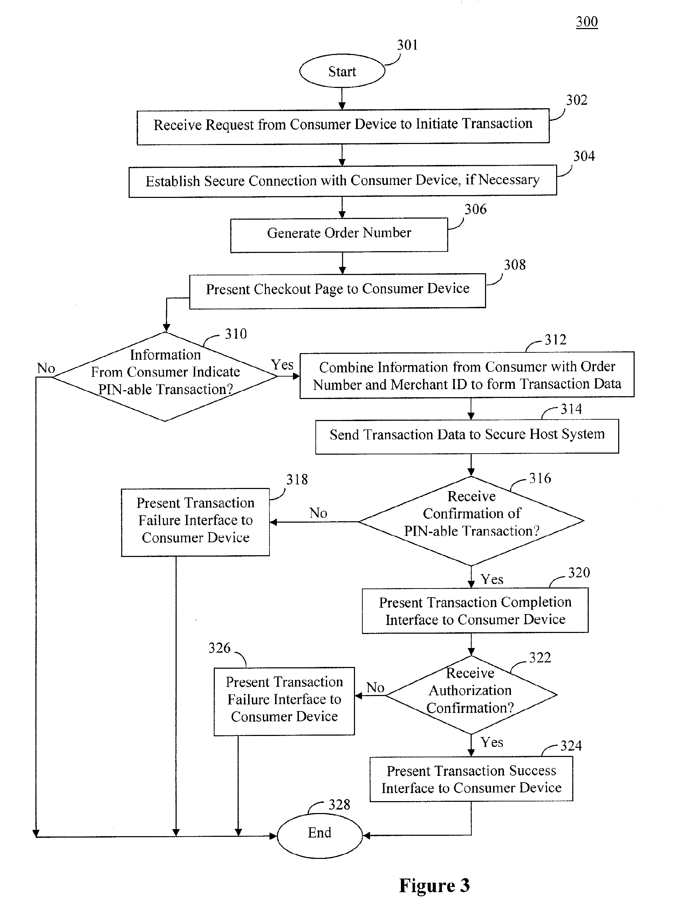

Figure 3 is a flow chart 300 illustrating a method for completing a PIN-based transaction, as performed by a merchant system, in accordance with certain exemplary embodiments of the present invention. The exemplary method begins at starting block 301 and proceeds to step 302, where a merchant system 40 receives a request from consumer device 20 to initiate a transaction. Typically, a transaction initiation request will be received from the consumer device 20 in the form of a command to "check out" or complete a purchase via the merchant's website hosted on the merchant server 42. At step 304, a SSL connection is established over the network 30 with the consumer device 20, if one has not already been established. Next at step 306, the merchant system 40 may generate an order number to help track the transaction. A checkout page is presented to the consumer device 20 at step 308, prompting the consumer to input certain information, including for example the amount of the payment to be made, an identifier of the account (the "PAN") from or to which the payment will be debited credited, and an indication of whether completion of the transaction requires a PIN.

At step 310, a determination is made as to whether the information received from the consumer device 20 includes an indication that completion of the transaction requires a PIN. If not, the method ends at step 328. If the information received from the consumer device 20 includes an indication of a PIN-able transaction, the information is combined with the order number and an applicable merchant ID (i.e., a unique identifier associated with the merchant or the merchant system 40) to form the transaction data at step 312. The transaction data is sent via a secure communication link to the secure host system 100 at step 314.

Next at step 316, a determination is made as to whether confirmation has been received from the secure host system 100 that the transaction is "PIN-able." In other words, the secure host system 100 examines the account number included in the transaction data and determines whether access of the associated account requires a PIN. If the transaction is not PIN-able, a transaction failure interface (e.g., a webpage) is presented to the consumer device 20 at step 318 to inform the consumer that the transaction cannot be completed using the supplied information and the method ends at step 328. Otherwise, if the transaction is PIN-able, a transaction completion interface (e.g., a webpage) is presented to the consumer device 20 at step 320. The transaction interface includes code (e.g., an Ajax control or other script, program or object) that makes a call to the secure host system 100 for presentation of the verification interface 200. After presentation of the transaction completion interface, the merchant system 40 waits for confirmation from the secure host system 100 that the transaction has been authorized. At step 322, a determination is made as to whether the transaction has been authorized. If so, a transaction success interface is presented to the consumer device 20 at step 324 to inform the consumer that the transaction has been successfully completed. The transaction success interface may include, or may be followed by, a receipt of the transaction for the consumer's records. If it is determined at step 322 that the transaction has not been authorized, a transaction failure interface is presented to the consumer device 20 at step 326 to inform the consumer that the transaction cannot be completed using the supplied information. Optionally, the transaction failure interface may allow the consumer to input new information to re-try the transaction. Following presentation of either the transaction success interface or the transaction failure interface, the exemplary method 300 ends at step 328.

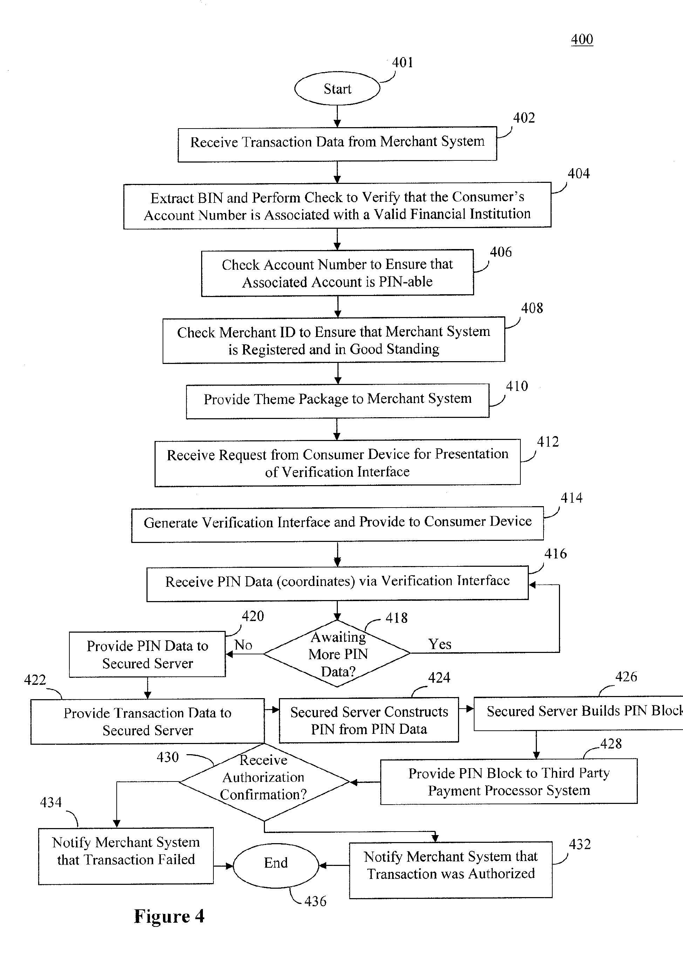

Figure 4 is a flow chart 400 illustrating a method for completing a PIN-based transaction, as performed by a secure host system, in accordance with certain exemplary embodiments of the present invention. The exemplary method begins at starting block 401 and proceeds to step 402, where the secure host system 100 receives transaction data from a merchant system 40. At step 404, a BIN (Bank identification number) is extracted from the transaction data and is used to verify that the consumer's account number is associated with a valid financial institution. At step 406, the account number is checked to ensure that that associated account is PIN-able. At step 408, the merchant ID is checked to ensure that the merchant system 40 is registered and in good standing with the secure host system 100. The verification checks of steps 404-408 can be performed in any order or in parallel and may each be performed using look-up tables maintained by the secure host system or through other well known means. Additional and/or alternative verification checks may also be performed to ensure that the requested transaction should proceed.

Upon successful completion of the initial verification steps, a "theme package" is sent to the merchant system 40 at step 410. The theme package is a set of specifications associated with the verification interface 200. The merchant system 40 can use the theme package to generate the transaction completion interface into which the verification interface 200 will be embedded. The theme package may specify the look and feel of the transaction completion interface, including whether any logos or color schemes associated with a particular financial institution should be displayed.

Next, at step 412, a request is received from the consumer device 20 for presentation of the verification interface 200. In response to said request, the verification interface 200 is generated and provided to the consumer device 20 at step 414. The verification interface 200 may be embedded in a transaction completion interface provided by the merchant system 40. As described above, the interactive components 202 of the verification interface 200 may be randomly arranged.

At step 416, coordinates representing at least one selected interactive component 202 are received via the verification interface 200. At step 418 a determination is made as to whether any additional coordinates are required or expected. If so, the method returns to step 416 to receive additional coordinates. When all coordinates are finally received, the method moves to step 420, where the coordinates are provided to a secured server 150, such as an HSM, as PIN data. At step 422, the transaction data received from the merchant system 40 is also provided to the secured server 150. At step 424, the secured server 150 associates the coordinates of the PIN Data with PIN elements, in order to construct the consumer's PIN. At step 426, the secured server 150 uses the PIN and the transaction data, including the PAN, to construct a PIN block. At step 428, the secured server 150 encrypts the PIN block and provides it to a third-party payment processor system 50 for verification and authorization of the transaction.

After providing the PIN block to the third-party payment processor system 50, the secure host system 100 waits for confirmation from the third-party payment processor system 50 that the transaction has been authorized. At step 430, a determination is made as to whether such confirmation is received. If so, a confirmation is sent to the merchant system 40 at step 432. Otherwise, a transaction failure notice is provided to the merchant system 40 at step 434. Following notification to the merchant system 40 as to whether the transaction has been authorized and completed, the exemplary method 400 ends at step 436.

The foregoing description of the exemplary embodiments of the invention has been presented only for the purposes of illustration and description and is not intended to be exhaustive or to limit the invention to the precise forms disclosed. The exemplary methods discussed herein are provided by way of illustration only and are not intended to limit the present invention to the recited sequences of steps. Additional and/or alternative method steps and/or methods may be performed in accordance with the present invention. Likewise, the described systems and devices are provided by way of illustration and are not intended to limit the present invention to any particular configuration. For example, functionality described in connection with one device may be performed by another device without departing from the spirit of the present invention. Accordingly, it should be appreciated from a reading of the description above pertaining to various exemplary embodiments, that many other modifications, features, embodiments and operating environments of the present invention are possible. Additionally, the systems and methods described above may be used in conjunction with non-financial accounts and systems that require access verification. The features and aspects of the present invention have been described or depicted by way of example only and are therefore not intended to be interpreted as required or essential elements of the invention. It should be understood, therefore, that the foregoing relates only to certain exemplary embodiments of the invention, and that numerous changes and additions may be made thereto without departing from the spirit and scope of the invention as defined by any appended claims.

## Claims

1. A method for securely authorizing a PIN-based transaction between a merchant system and a consumer device, comprising:
receiving, from the merchant system via a first communication link, transaction data comprising an account identifier and a payment amount;
presenting a verification interface to the consumer device via a second communication link, said verification interface including a plurality of interactive controls;
receiving from the consumer device via said verification interface coordinates representing locations within the verification interface of selected interactive controls corresponding to PIN elements;
determining the PIN elements based on said coordinates;
building a PIN block based on said PIN elements and said transaction data within a secure server; and
providing said PIN block to a third party payment processor system and awaiting a confirmation from the third party payment processor system that the transaction has been authorized.

2. The method of claim 1, further comprising the step of, in response to receiving said confirmation, notifying the merchant system that the transaction has been authorized.

3. The method of claim 1 or 2, further comprising the step of, in response to receiving a denial, notifying the merchant system that the transaction has not been authorized.

4. The method of any of the preceding claims, further comprising the step of, in response to receiving the transaction data from the merchant system, determining that an account associated with the account identifier is PIN-able.

5. The method of any of the preceding claims, further comprising the step of, in response to receiving the transaction data from the merchant system, determining that a BIN included within the account identifier is associated with a valid participating financial institution.

6. The method of any of the preceding claims, wherein the transaction data further comprises a merchant ID; and
wherein the method further comprises the step of, in response to receiving the transaction data from the merchant system, verifying that the merchant system is registered and in good standing based on the merchant ID.

7. The method of any of the preceding claims, wherein the plurality of interactive controls are randomly arranged within the verification interface.

8. The method of claim 7, wherein presenting a verification interface to the consumer device via a second communication link, said verification interface including a plurality of interactive controls further comprises presenting a verification interface after generating an algorithm that randomly arranges the plurality of interactive controls.

9. The method of claim 7 or 8, wherein the plurality of interactive controls are randomly rearranged within the verification interface after each selection of one of the interactive controls corresponding to a PIN element.

10. The method of any of the preceding claims, wherein the secured server comprises a hardware security module.

11. The method of any of the preceding claims, further comprising the step of, in response to receiving the transaction data from the merchant system, providing a theme package to the merchant system.

12. The method of any of the preceding claims, wherein presenting a verification interface to the consumer device via a second communication link further comprises presenting a verification interface after receiving a request from the consumer device to present the verification interface.

13. A system for of securely authorizing a PIN-based transaction between a merchant system and a consumer device, comprising:
a transaction gateway server for receiving from the merchant system via a first communication link transaction data comprising an account identifier and a payment amount;
a verification application server for generating a verification interface and for randomly arranging a plurality of interactive controls within the verification interface;
a verification gateway for providing the verification interface to the consumer device via a second communication link and for receiving from the consumer device via the verification interface coordinates representing locations within the verification interface of selected interactive controls corresponding to PIN elements; and
a secured server for receiving the coordinates and the transaction data, determining the PIN elements based on said coordinates, building a PIN block based on said PIN elements and said transaction data, and providing said PIN block to a third party payment processor system for authorization of the transaction.

14. The system of claim 13, further comprising a transaction application server; and
wherein the transaction data further comprises a merchant ID, the merchant ID used by the transaction application server to verify that the merchant system is registered and in good standing with the system.

15. The system of claim 14, wherein the transaction application server provides a theme package to the merchant system.
